# EUROPÄISCHE PATENTSCHRIFT

(11) **EP 0 647 856 B1**
(45) Veröffentlichungstag und Bekanntmachung des Hinweises auf die Patenterteilung: **12.08.1998**
(21) Anmeldenummer: 94115519.4
(22) Anmeldetag: 01.10.1994
(51) Int. Cl.: G01S 13/04, G08B 13/181, G08B 29/26

(54) **Verfahren zum Überwachen der Öffnungen eines geschlossenen Raumes**
Method for monitoring the openings of a closed space
Procédé de surveillance des ouvertures d'un espace fermé

(30) Priorität: 07.10.1993 DE 4334197
(43) Veröffentlichungstag der Anmeldung: 12.04.1995
(73) Patentinhaber: TEMIC TELEFUNKEN microelectronic GmbH, 74072 Heilbronn (DE)
(72) Erfinder: Bichlmaier, Günther, D-90449 Nürnberg (DE); Fach, Hans-Joachim, D-90461 Nürnberg (DE); Teubert, Udo, D-92318 Neumarkt (DE); Friedrich, Ferdinand, D-90562 Heroldsberg (DE); Gräfje, Dieter, D-91052 Erlangen (DE); Rupprecht, Thomas, D-92709 Moosbach (DE); Doerfler, Dr. Reiner, D-90403 Nürnberg (DE); Wiedemann, Werner, D-91074 Herzogenaurach (DE); Ertel, Rainer, D-90513 Zirndorf (DE); Robitschko, Peter, D-71069 Sindelfingen (DE); Hettich, Dr. Gerhard, D-90599 Dietenhofen (DE); Dilz, Bernhard, D-71067 Sindelfingen (DE)
(74) Vertreter: Maute, Hans-Jürgen, Dipl.-Ing.

(56) Entgegenhaltungen:
- EP-A- 0 226 694
- WO-A-80/02764
- WO-A-86/01061
- DE-A- 3 316 010
- DE-A- 4 030 607

## Beschreibung

Öffnungen von geschlossenen Räumen werden meist durch Alarmanlagen mit Hilfe von IR-Reflexlichtschranken überwacht. Diese verwenden in der Regel Retro-Reflektoren, die die von IR-Sendedioden emittierte Strahlung reflektieren; die reflektierte Strahlung wird von IR-Empfangsdioden detektiert, bei Unterbrechung des reflektierten Lichtstrahls wird Alarm ausgelöst. Nachteilig hierbei ist jedoch, daß
- nur wenige ausgezeichnete Richtungen überwacht werden (für eine lückenlose Überwachung der Öffnungen des Raumes wären sehr viele Sendedioden notwendig)
- eine leichte Uberlistung der Alarmanlage möglich ist, da nur die Unterbrechung des Lichtstrahls festgestellt und keine genaue Auswertung (Intensitätsbewertung) durchgeführt wird
- die Auslöseschwellen für den Alarmfall wegen der Fehlalarmsicherheit relativ hoch angesetzt werden müssen; da aber der überwachte Raum groß im Verhältnis zu dem Raumelement ist, in dem ein Ereignis (Einbruch) stattfindet und somit die Signaländerungen entsprechend gering sind, treten große Uberwachungslücken auf
- bei der Überwachung von Glasöffnungen (beispielsweise Fensterscheiben) aufgrund deren hoher IR-Durchlässigkeit von außen Störungen provoziert und damit Fehlalarme ausgelöst werden können.

Ein Verfahren zum Überwachen eines im wesentlichen geschlossenen Raumes gemäß dem Oberbegriff des Anspruchs 1 ist aus der DE-A-33 16 010 bekannt.

Der Erfindung liegt die Aufgabe zugrunde, ein Verfahren anzugeben, bei dem die genannten Nachteile vermieden werden, das eine hohe Fehlalarmsicherheit sowie geringe Uberwachungslücken gewährleistet und das nur einen geringen Energiebedarf erfordert.
Diese Aufgabe wird erfindungsgemäß durch die Merkmale a) bis e) des Patentanspruchs 1 gelöst.
Vorteilhafte Weiterbildungen des erfindungsgemäßen Verfahrens ergeben sich aus den Unteransprüchen.

Das vorgestellte Verfahren vereinigt mehrere Vorteile in sich:
- durch die Anordnung und Ausgestaltung der Bauelemente der optoelektronischen Einheit (Sendeelemente und Empfangseleiente) und der Bauelemente der optischen. Einheit kann eine in einer Raumrichtung gebündelte und den Raumöffnungen angepaßte Richtcharakteristik der IR-Strahlung und damit eine vorhangähnliche Überwachung entlang den einzelnen Raumöffnungen (d. h. entlang des möglichen Einbruchbereichs) erreicht werden, ohne daß IR-Strahlung aus dem Raum nach außen dringt; man erhält somit eine scharfe Abgrenzung des Uberwachungsbereichs. Dringt ein Körper in den Überwachungsbereich ein, verändert sich das detektierte Reflexionssignal sehr stark (hohe Dynamik), so daß (selbst beim Eindringen kleiner Gegenstände) Uberwachungslücken minimiert werden und trotzdem eine hohe Fehlalarmsicherheit hinsichtlich externer Störungen gewährleistet ist
- durch einen Zwei-Modus-Betrieb ("Normal-Modus", "Alarm-Modus") mit einer betriebsmodusabhängigen Wiederholrate der Meßvorgänge kann eine wesentliche Stromeinsparung erzielt werden, so daß auch die mögliche Betriebszeit der Alarmanlage bei Speisung aus einer Batterie signifikant verlängert wird: im stromsparenden "Normal-Modus" wird in größeren Zeitabständen (beispielsweise alle 50 ms) ein Meßvorgang pro Überwachungsbereich generiert, in den dazwischen liegenden Pausenzeiten werden die Überwachungselemente abgeschaltet und erst nach Ablauf der Pausenzeit wieder aktiviert; nur wenn die Differenz zwischen dem aktuellen Meßwert und dem (nachgeführten) Mittelwert aus vorherigen Messungen einen festgelegten Schwellwert überschreitet, wird in den "Alarm-Modus" übergegangen und eine Folge von (beispielsweise 100) Meßvorgängen mit wesentlich kürzeren Zeitabständen (beispielsweise 1 ms) generiert - deren Meßergebnisse werden nach abgespeicherten Kriterien bewertet und dadurch eine Unterscheidung zwischen Störungen und tatsächlichen Einbruchsszenarien getroffen.
- durch eine Messung des Gleichlichtanteils der IR-Empfangsdioden (dieser entsteht beispielsweise aufgrund der Reflexion von Sonnenlicht oder durch provozierte Einspiegelung) gleichzeitig mit dem Meßsignal (Nutzsignal) und durch eine Linearisierung der Kennlinie der IR-Empfangsdioden (die Gleichlichtabhängigkeit der Amplitude des Nutzsignals wird dadurch unterdrückt, daß der Meßwert auf den Wert des Nutzsignals ohne Umlicht umgerechnet wird) wird die Empfindlichkeit gegen äußere Störungen herabgesetzt und die Auswertung verbessert - damit können die Alarm-Auslöseschwellen fehlalarmsicher herabgesetzt werden, wodurch die Empfindlichkeit gegenüber Einbruchsszenarien erhöht wird.
- durch einen variierbaren Vorverstärker wird in einer Adaptionsphase (diese wird nach jeder Aktivierung der Alarmanlage, nach jedem Alarmfall und nach Driften des Referenzwerts aus einem variablen Grenzwertfenster vorgegeben) der Meßbereich der Empfangsdioden so eingestellt, daß das Meßsignal des ungestörten Zustands (dieser Wert wird als Referenzwert abgespeichert) in der Mitte des Meßbereichs liegt; dies führt zur bestmöglichen Erfassung und Auswertung der Meßsignaländerungen bei Einbrüchen oder Störungen (da das Meßsignal im ungestörten Zustand aufgrund äußerer Einflüsse wie beispielsweise der Temperatur langsam driften kann, wird dieses auf übliche Weise durch Filterung und Mittelwertbildung nachgeführt und jeweils als neuer Referenzwert abgespeichert).

Anhand der Figuren 1 bis 3 wird ein Ausführungsbeispiel beschrieben - ein Verfahren zum Schutz des Innenraums eines Kraftfahrzeugs durch Überwachung der Fensterscheiben.
Dabei zeigt die Figur 1 die Seitenansicht des Kraftfahrzeugs mit den beiden Seitenfensterscheiben, die Figur 2 das Steuermodul mit optoelektronischer Einheit und optischer Einheit und die Figur 3 ein Flußdiagramm zur Ablaufsteuerung des Überwachungsverfahrens.

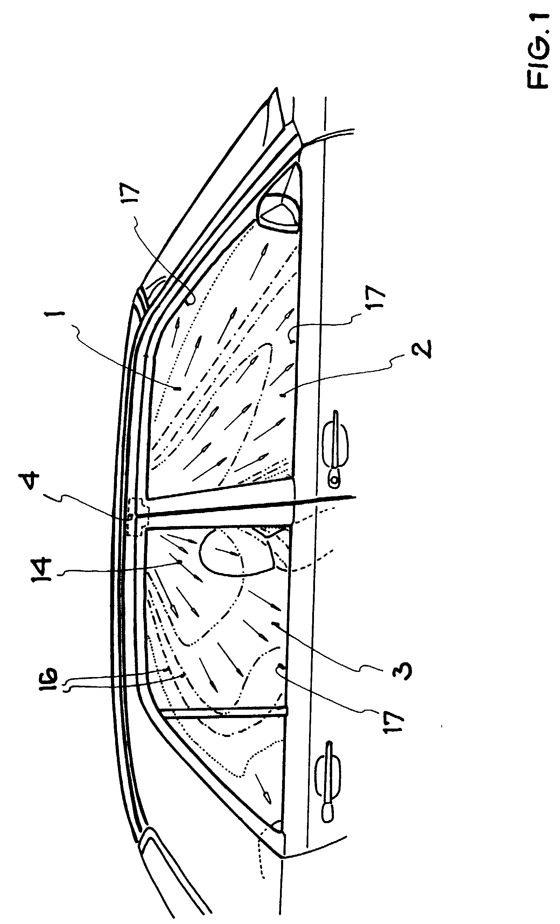

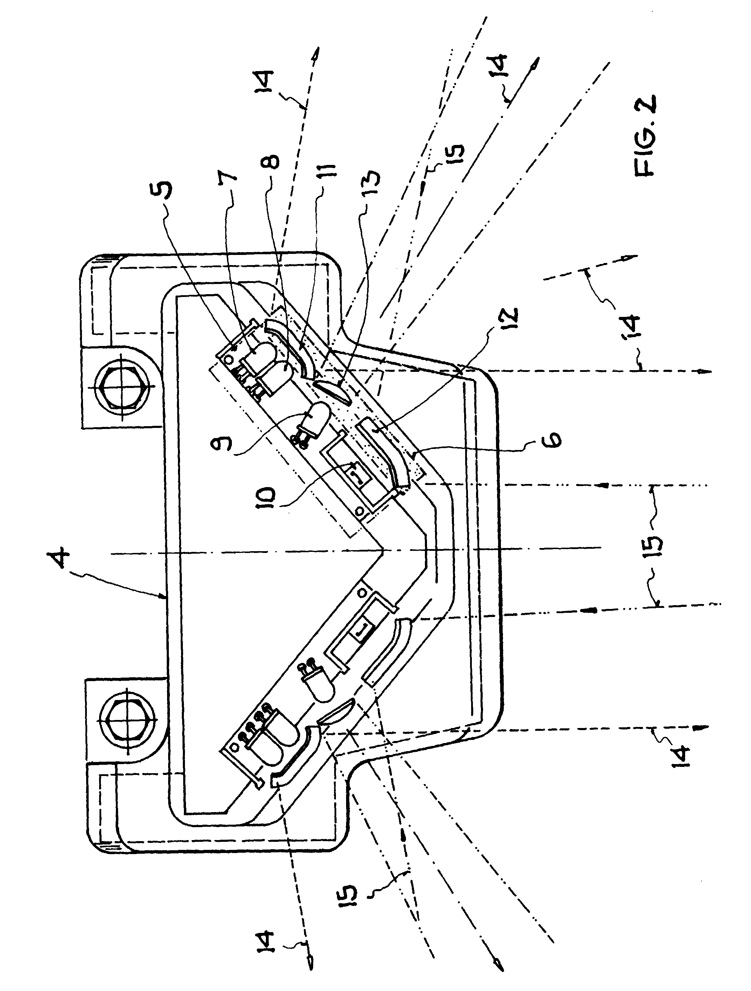

In der Figur 1 sind für die beiden Seitenfensterscheiben 2, 3 des Kraftfahrzeugs die Linien gleicher Empfindlichkeit bzw. gleicher Signaländerung (Iso-Linien 16) als Überlagerung der Sendecharakteristik der emittierten IR-Strahlung 14 und der Empfangscharakteristik der detektierten reflektierten IR-Strahlung 15 dargestellt. Die Richtcharakteristik der IR-Strahlung (von beispielsweise 950 nm Wellenlänge) ist der Form der Fensterscheiben 2, 3 bzw. der Fenstergeometrie nachgebildet; durch die unterschiedliche Reichweite der emittierten Strahlung 14 in den verschiedenen Richtungen wird quasi ein Uberwachungsvorhang entlang der beiden Fensterscheiben 2, 3 gebildet. Dadurch ist ein wirksamer Schutz vor Einbrüchen in den Innenraum 1 des Kraftfahrzeugs durch die Seitenfensterscheiben 2, 3 oder vor der Entwendung von Gegenständen aus dem Innenraum 1 des Kraftfahrzeugs durch die Seitenfensterscheiben 2, 3 gegeben.
Die Richtcharakteristik der IR-Strahlung wird gemäß der Figur 2 vom Steuermodul 4 durch die Kombination einer optoelektronischen Einheit 5 (Sendeelemente 7, 8, 9, Empfangselemente 10) mit einer optischen Einheit 6 (optische Bauelemente 11, 12, 13) erreicht; die Bauelemente 11, 12, 13 der optischen Einheit 6 sind dabei in einer festen Position bezüglich der Bauelemente 7, 8, 9, 10 der optoelektronischen Einheit 5 befestigt. Beispielsweise sind für jede Fensterscheibe 2, 3 als Sendeelemente drei IR-Sendedioden 7, 8, 9 und als Empfangselement eine IR-Empfangsdiode 10 vorgesehen. Vor der Empfangsdiode 10 und vor jeweils zwei Sendedioden 7, 8 ist eine asphärische, plankonvexe Zylinderlinse 12, 11 angebracht, durch die die emittierte Strahlung 14 bzw. reflektierte Strahlung 15 in einer Richtung stark gebündelt, senkrecht dazu aber nicht verändert wird; vor einer Sendediode 9 ist eine asphärische Kondensorlinse 13 angebracht, die als "Spot" zur Ausleuchtung der am weitesten entfernten Fensterecke dient (als Bauelemente der optischen Einheit 6 können bei entsprechender Position der optoelektronischen Elemente 7 bis 10 anstelle von Zylinderlinsen auch Spiegel oder holographisch optische Elemente eingesetzt werden). Jede Fensterscheibe 2, 3 wird durch eine separate Kombination aus optoelektronischer Einheit 5 und optischer Einheit 6 getrennt überwacht. Aus einer Überlagerung der Sende- und Empfangscharakteristik der einzelnen Sendeelemente 7, 8, 9 und Empfangselemente 10 werden die in der Fig. 1 dargestellten Iso-Linien 16 der Empfindlichkeitskurve bestimmt. Diese sollten nach Möglichkeit der geometrischen Form des Kfz-Seitenfensters 2, 3 entsprechen - dies kann beispielsweise durch geeignete Wahl und Anordnung der Bauelemente der optischen Einheit 6 oder der Bauelemente der optoelektronischen Einheit 5 erreicht werden.

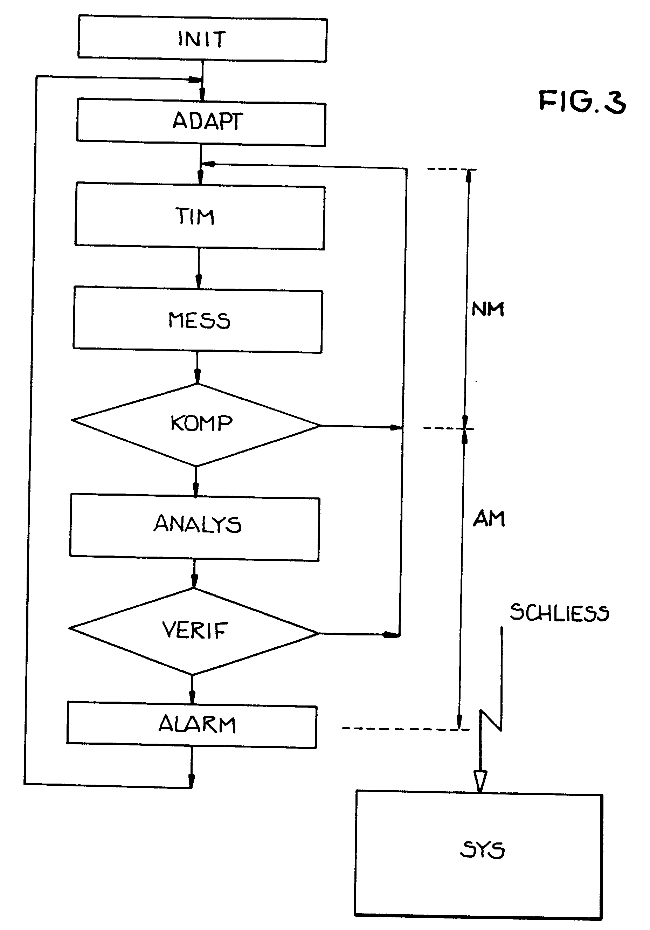

Der Ablauf des Verfahrens wird anhand des Flußdiagramms der Figur 3 erläutert: Über den Schließvorgang SCHLIESS (Betätigung des Schließzylinders an der Fahrertüre oder Betätigung einer Fernbedienung für die Zentralverriegelung) kann die Alarmanlage SYS aktiviert und deaktiviert werden. Nach der Aktivierung des Systems SYS und der Initialisierung INIT wird eine Systemanpassung ADAPT mit Systemparameteradaption (Festlegung des Meßbereichs, Einstellung der Empfangsdioden ...) und Plausibilitätskontrollen vorgenommen.
Nach dem Erkennen des Signals eines Timers TIM (das beispielsweise in Abständen von 250 ms erfolgt) wird im Normalmodus NM ein Meßvorgang MESS durchgeführt - die einzelnen Schritte hierbei sind: Aussenden eines pulsförmigen IR-Sendesignals aus beispielsweise 32 Pulsen mit jeweils 50 kHz, Messen des modulierten IR-Reflexionssignals, Messen der Gleichlichtintensität, Gleichlichtkorrektur des von den Empfangsdioden empfangenen IR-Signals. Anhand des Vergleichs KOMP des IR-Signals mit dem Referenzwert und mit festgelegten Schwellwerten wird die Entscheidung über die weitere Vorgehensweise getroffen: besteht kein Alarmverdacht, wird der Normal-Modus NM beibehalten, die Systemkomponenten werden abgeschaltet und erst nach einer vom Timer TIM vorgegebenen Pausenzeit (beispielsweise 250 ms) wieder aktiviert; die Totzeit der Alarmanlage (Zeitintervall zwischen zwei Timersignalen TIM) muß so gewählt werden, daß beispielsweise durch einen schnellen Griff durch die Seitenscheibe keine Gegenstände aus dem Kraftfahrzeug-Innenraum ohne Alarmauslösung entfernt werden können.
Beim Überschreiten eines Schwellwerts bzw. von Schwellwerten ist ein Alarmverdacht gegeben und es wird vom "Normal-Modus" NM in den "Alarm-Modus" AM übergegangen. Im Alarm-Modus AM wird zunächst der Alarmverdacht analysiert und überprüft (ANALYS); hierzu wird eine Serie von Einzelmessungen in kurzen Abständen (beispielsweise 32 IR-Einzelmessungen alle 20 ms von jeweils 1 ms Dauer) durchgeführt, die jeweiligen Meßergebnisse werden durch einen Vergleich mit abgespeicherten Mustern klassifiziert. In einem Verifikationsschritt VERIF wird überprüft, ob sich die Meßergebnisse den Kriterien bzw. Mustern eines Alarmfalls zuordnen lassen: ist dies nicht der Fall, liegt eine Störung vor, so daß in den "Normal-Modus" NM übergegangen und auf das nächste Timer-Signal TIM gewartet wird; andernfalls ist ein Alarmfall erkannt, bei dem durch optische oder akustische Hilfsmittel ein Alarmsignal ALARM ausgelöst wird.

## Patentansprüche

1. Verfahren zum Überwachen der Öffnungen (2, 3) eines geschlossenen Raums (1) mittels einer IR-Alarmanlage, wobei:
a) durch ein Steuermodul (4) mit einer Steuereinheit, einer optoelektronischen Einheit (5) und einer optischen Einheit (6) ein Meßvorgang generiert wird, bei dem modulierte IR-Strahlung (14) von mindestens einem IR-Sendeelement (7, 8, 9) der optoelektronischen Einheit (5) pulsförmig emittiert und die an den Randbereichen (17) der Öffnungen (2, 3) reflektierte Strahlung (15) als Meßsignal von mindestens einem IR-Empfangselement (10) der optoelektronischen Einheit (5) detektiert wird,
gekennzeichnet dadurch, daß
b) die Richtcharakteristik (16) der IR-Strahlung (14, 15) durch optische Bauelemente (11, 12, 13) der optischen Einheit (6) an die jeweils zu überwachende Öffnung (2, 3) angepaßt wird,
c) das durch Empfangselemente (10) mit eliminiertem Gleichlichtanteil detektierte Meßsignal von der Steuereinheit des Steuermoduls (4) durch Vergleich mit einem nachgeführten Mittelwert ausgewertet (KOMP) und abhängig von diesem Vergleich der Betriebsmodus (NM, AM) der Alarmanlage festgelegt wird, indem
d) bei einer annähernden Übereinstimmung des Meßsignals und des nachgeführten Mittelwerts als Betriebsmodus der Normal-Modus (NM) vorgegeben wird, bei dem der nächste Meßvorgang nach einer Pausenzeit generiert wird und während der Pausenzeit Steuereinheit, Sendeelemente (7, 8, 9) und Empfangselemente (10) abgeschaltet werden, oder
e) bei einer signifikanten Abweichung des Meßsignals vom nachgeführten Mittelwert als Betriebsmodus der Alarm-Modus (AM) vorgegeben wird, bei dem eine Anzahl zeitlich unmittelbar aufeinanderfolgender Meßvorgänge generiert und durch einen Vergleich mit im Steuermodul (4) abgespeicherten Kriterien dergestalt bewertet werden (VERIF), daß ein Eindringen von Objekten oder Personen durch die zu überwachende Öffnungen (2, 3) erkannt und ein Alarmsignal (ALARM) ausgelöst wird, wenn die Meßsignale der Meßvorgänge den abgespeicherten Kriterien entsprechen.

2. Verfahren nach Anspruch 1, dadurch gekennzeichnet, daß die optischen Bauelemente (11, 12, 13) der optischen Einheit (6) in einer festen Position bezüglich der Sendeelemente (7, 8, 9) und Empfangselemente (10) der optoelektronischen Einheit (5) angebracht werden.

3. Verfahren nach Anspruch 1 oder 2, dadurch gekennzeichnet, daß die Pausenzeiten im Normal-Modus (NM) von einem Zeitglied-Signal (TIM) vorgegeben werden.

4. Verfahren nach einem der Ansprüche 1 bis 3, dadurch gekennzeichnet, daß in einer Adaptionsphase der Meßbereich für das Meßsignal derart eingestellt wird, daß das Meßsignal im Normal-Modus (NM) in der Mitte des Meßbereich liegt.

5. Verfahren nach Anspruch 4, dadurch gekennzeichnet, daß eine Adaptionsphase bei jeder Aktivierung der Alarmanlage, nach jedem Alarmfall und nach Driften des Referenzwerts aus einem variablen Grenzwertfenster vorgenommen wird.

6. Verfahren nach einem der Ansprüche 1 bis 5, dadurch gekennzeichnet, daß das Gleichlichtsignal gemessen wird, und daß das Meßsignal auf den Wert ohne Gleichlichtanteil umgerechnet und dadurch die Gleichlichtabhängigkeit der IR-Empfangselemente (10) eliminiert wird.

## Claims

1. Method of monitoring the openings (2, 3) in an enclosed space (1) by means of an IR alarm system, wherein:
a) a test cycle is generated by means of a control module (4) comprising a control unit, an opto-electronic unit (5) and an optical unit (6) whereby modulated IR rays (14) are emitted in the form of pulses from at least one IR emitting unit (7, 8, 9) of the opto-electronic unit (5) and the rays (15) reflected at the edge regions (17) of the openings (2, 3) are detected as a test signal by at least one IR receiving element (10) of the opto-electronic unit (5),
characterised in that,
b) the radiation pattern (16) of the IR rays (14, 15) is matched to the opening (2, 3) currently being monitored by means of optical components (11, 12, 13) in the optical unit (6),
c) the test signal with the steady light component eliminated therefrom that is detected by the receiving elements (10) is evaluated (COMP) by the control unit of the control module (4) by comparing it with a follow-up average value, and the operating mode (NM, AM) of the alarm system is set in dependence on this comparison in that
d) the normal mode (NM) is prescribed as the operating mode when the test signal and the follow-up average value are approximately equal, whereby the next test cycle is generated after a rest period and the control unit, the emitting elements (7, 8, 9) and the receiving elements (10) are switched off during the rest period, or
e) in the case where there is a significant deviation of the test signal from the follow-up average value, the alarm mode (AM) is prescribed as the operating mode whereby a number of test cycles are generated in direct succession and are evaluated (VERIF) by comparision with criteria stored in the control module (4) in a manner such that any ingress of the openings (2, 3) being monitored by objects or people is recognised, and an alarm signal (ALARM) is set off if the test signals produced in the test cycles correspond to the stored criteria.

2. Method in accordance with Claim 1, characterised in that the optical components (11, 12, 13) in the optical unit (6) are installed at a fixed position relative to the emitting elements (7, 8, 9) and receiving elements (10) of the opto-electronic unit (5).

3. Method in accordance with Claim 1 or 2, characterised in that the rest periods in the normal mode (NM) are defined by the signal (TIM) from a timing element.

4. Method in accordance with any of the Claims 1 to 3, characterised in that the test range for the test signal is adjusted during an adaptation phase in such a way that the test signal lies in the centre of the test range in the normal mode (NM).

5. Method in accordance with Claim 4, characterised in that an adaptation phase is initiated whenever the alarm system is activated, following each instance of an alarm and following any drift of the reference value outside a variably sized threshold window.

6. Method in accordance with any of the Claims 1 to 5, characterised in that the steady light signal is measured and that the test signal is converted into a value excluding the steady light component thereby eliminating the steady light dependency factor of the IR receiving elements (10).

## Revendications

1. Procédé de surveillance de l'ouverture (2, 3) d'un espace (1) fermé au moyen d'un système d'alarme à infrarouge, dans lequel :
a) on engendre par un module de commande (4) comportant une unité de commande, une unité (5) optoélectronique, et une unité optique (6), une opération de mesure dans laquelle on émet en forme d'impulsions un rayonnement infrarouge (14) modulé provenant d'au moins un élément émetteur à infrarouge (7, 8, 9) de l'unité optoélectronique (5) et l'on détecte le rayonnement (15) réfléchi dans les régions de bord (17) de l'ouverture (2, 3) en tant que signal mesuré provenant d'au moins un élément récepteur à infrarouge (10) de l'unité optoélectronique (5),
caractérisé en ce que :
b) la directivité (16) du rayonnement infrarouge (14, 15) est adaptée à l'ouverture (2, 3) respective à surveiller, au moyen de composants (11, 12, 13) optiques de l'unité optique (6),
c) le signal de mesure détecté par des éléments de réception (10) avec élimination de la part de lumière constante, est évalué par l'unité de commande du module de commande (4) en le comparant à une valeur moyenne actualisée (COMP) et, en fonction de cette comparaison, on définit le mode de fonctionnement (NM, AM) du système d'alarme,
d) en déterminant comme mode de fonctionnement le fonctionnement normal (NM) lorsque le signal mesuré et la valeur moyenne actualisée concordent approximativement, en engendrant une opération de mesure consécutive après un temps de pause et en déconnectant l'unité de commande, les éléments émetteurs (7, 8, 9) et les éléments récepteurs (10) pendant le temps de pause, ou
e) en déterminant comme mode de fonctionnement le fonctionnement en alarme (AM) en cas de déviation significative du signal mesuré par rapport à la valeur moyenne actualisée, dans lequel est engendré un nombre d'opérations de mesure se succédant directement dans le temps et dans lequel une comparaison avec les critères mémorisés dans le module de commande (4) est évaluée (VERIF) de telle sorte qu'on reconnaît que des objets ou des personnes passent à travers l'ouverture (2, 3) à surveiller et qu'un signal d'alarme (ALARM) est déclenché lorsque les signaux mesurés des opérations de mesure correspondent aux critères mémorisés.

2. Procédé selon la revendication 1, caractérisé en ce que les composants optiques (11, 12, 13) de l'unité optique (6) sont montés dans une position fixe par rapport aux éléments émetteurs (7, 8, 9) et aux éléments récepteurs (10) de l'unité optoélectronique (5).

3. Procédé selon l'une ou l'autre des revendications 1 et 2, caractérisé en ce que les temps de pause en mode normal (NM) sont prédéterminés par un signal d'un circuit de temporisation (TIM).

4. Procédé selon l'une quelconque des revendications 1 à 3, caractérisé en ce que dans une phase d'adaptation, la plage de mesure pour le signal mesuré est réglée de telle sorte que le signal mesuré se trouve au milieu de la plage de mesure en mode normal (NM).

5. Procédé selon la revendication 4, caractérisé en ce que l'on procède à une phase d'adaptation à chaque activation du système d'alarme, après chaque cas d'alarme, et après une dérive de la valeur de référence hors d'une fenêtre de valeurs limites variable.

6. Procédé selon l'une quelconque des revendications 1 à 5, caractérisé en ce que le signal de lumière constante est mesuré et en ce que le signal mesuré est converti dans la valeur sans part de lumière constante et en ce que l'on élimine de ce fait la dépendance de la lumière constante des éléments récepteurs à infrarouge.
